# EUROPÄISCHE PATENTSCHRIFT

(11) **EP 0 868 630 B1**
(45) Veröffentlichungstag und Bekanntmachung des Hinweises auf die Patenterteilung: **05.03.2003**
(21) Anmeldenummer: 96940976.2
(22) Anmeldetag: 17.12.1996
(51) Int. Cl.: F16L 47/00

(54) **VENTIL-ANBOHRARMATUR FÜR EINE KUNSTSTOFFROHRLEITUNG**
VALVE SELF-PIERCING TAP
ROBINET AUTO-PERCEUR A SOUPAPE

(30) Priorität: 22.12.1995 CH 4396
(43) Veröffentlichungstag der Anmeldung: 07.10.1998
(73) Patentinhaber: Georg Fischer Rohrleitungssysteme AG, 8201 Schaffhausen (CH)
(72) Erfinder: BUNGER, Lars, CH-8200 Schaffhausen (CH)
(74) Vertreter: Weiss, Wolfgang, Dr.
(86) Internationale Anmeldenummer: CH9600444
(87) Internationale Veröffentlichungsnummer: WO97023747

(56) Entgegenhaltungen:
- DE-A- 3 744 693
- DE-A- 4 244 741
- DE-A- 4 309 941
- DE-A- 4 331 817
- DE-C- 4 408 817
- DE-U- 1 633 594

## Beschreibung

Die Erfindung betrifft eine Ventil-Anbohrarmatur für eine Kunststoffrohrleitung nach dem Oberbegriff des Anspruchs 1.

Aus der DE 44 08 817 C1 ist eine derartige Ventil-Anbohrarmatur bekannt, die ein Kunststoffgehäuse besitzt, das einen Abzweigstutzen aufweist und in das ein Ventil unter Verwendung einer Vielzahl von Dichtungsringen zwischen dem Gehäuse und dem Ventil als auch zwischen den Bauteilen des Ventils eingebaut ist. Die in den Abzweigstutzen ragende Abzweighülse ist separat ausgebildet. Eine derartige Armatur besitzt einen komplizierten Aufbau und ist aufwendig in der Montage. Die Dichtungsringe können altern und damit undicht werden.

Die DE 43 09 941 beschreibt eine gattungsgemässe Ventil-Anbohrarmatur für eine Kunststoffrohrleitung mit einem, einen Abzweigstutzen aufweisenden Gehäuse aus Kunststoff. Im Gehäuse ist ein Ventilkörper in Form einer zylindrischen Hülse angeordnet. Die Hülse weist von ihrer äusseren Oberfläche abstehende, einzelne, rotationssymmetrische Vorsprünge mit einem T-förmigen Querschnitt auf. Diese Vorsprünge sind umfangsseitig verteilt angeordnet und dienen dazu, dass die Hülse im Gehäuse verdrehsicher positioniert ist. Dichtungstechnisch ist diese Lösung ungünstig, weil die Dichtwirkung nur radial um die Vorsprünge herum sichergestellt ist. Zwischen den Vorsprüngen können sich aber Leckstellen bilden.

Aufgabe der Erfindung ist es, eine Ventil-Anbohrarmatur nach dem Oberbegriff des Anspruchs 1 zu schaffen, die im wesentlichen ohne separat zu montierende Dichtungsringe auskommt und von einfacher Konstruktion und Montage und von optimaler Dichtwirkung ist.

Diese Aufgabe wird durch die Lehre des Anspruchs 1 gelöst dass in der äusseren Oberfläche der Ventilbuchse mindestens eine umlaufende Nut angeordnet ist, die mindestens einen zum Ventilsitz gerichteten umlaufenden Schenkel aufweist, und dass das Gehäuse um die Ventilbuchse gespritzt ist, derart, dass das Kunststoffmaterial des Gehäuses die umlaufende Nut umfangsmässig auffüllt.

Weitere Ausgestaltungen der Erfindung sind der nachfolgenden Beschreibungen und den Unteranspruch zu entnehmen.

Die Erfindung wird nachstehend anhand von in den beigefügten Abbildungen dargestellten Aufführungsbeispielen näher erläutert.
- Fig. 1: zeigt hälftig im Axialschnitt eine Ausführungsform einer Ventil-Anbohrarmatur.
- Fig. 2: zeigt ausschnittsweise im Schnitt eine abgewandelte Ausführungsform der Ventil-Anbohrarmatur.

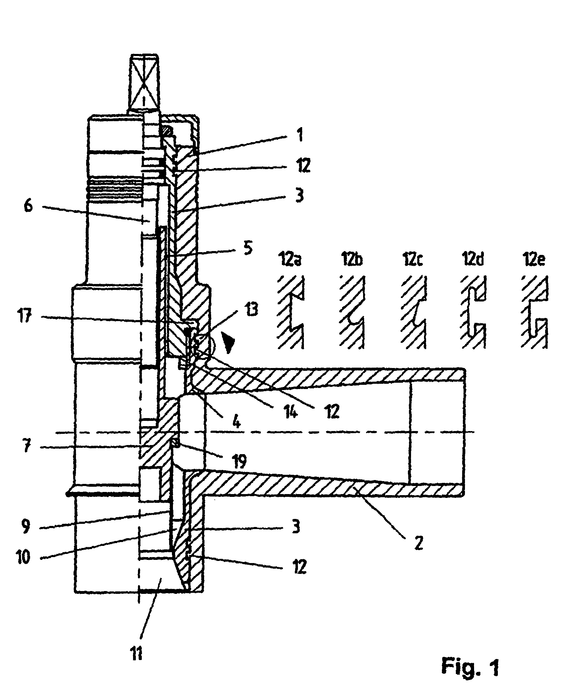

Die in Fig. 1 dargestellte Ventil-Anbohrarmatur umfasst ein aus Kunststoff gespritztes Gehäuse 1, das einen einstückig damit ausgebildeten Abzweigstutzen 2 aufweist. Das Gehäuse 1 kann einstückig mit einem nicht dargestellten Sattel, mit dem es auf eine Kunststoffrohrleitung aufsetzbar und an dieser befestigbar ist, ausgebildet sein oder mit einem derartigen Sattel verschweisst werden.

Das Gehäuse 1 nimmt eine Ventilbuchse 3 auf, die mit einer Abzweighülse 4 versehen ist, die in den Abzweigstutzen 2 ragt. Die Ventilbuchse 3 nimmt ihrerseits einen Ventilkörper 5 verdrehfest auf, der zur Sicherstellung der Verdrehfestigkeit beispielsweise einen sechseckigen Querschnitt besitzt, während die Ventilbuchse 3 einen entsprechenden Durchtrittsquerschnitt aufweist. Der Ventilkörper 5 steht mit einer Gewindespindel 6 in Eingriff, so dass er durch Drehen der Gewindespindel 6 axial in der Ventilbuchse 3 verschiebbar ist.

Der Ventilkörper 5 trägt einen Ring 7, der an dem Ventilkörper 5 über eine (zwei) Schraube 8 befestigt ist. Der Ring 7 trägt einen Stanzring 9, dessen Schneide zum Anbringen einer Öffnung in einer Kunststoffrohrleitung, auf der die Ventil-Anbohrarmatur befestigt worden ist, durch einen Ventilsitz 10 benachbart zu einer Zutrittsöffnung 11 des Gehäuses 1 hindurch über die axiale Verschiebung des Ventilkörpers 5 in die Kunststoffrohrleitung eindringen kann. Das hohle Stanzwerkzeug 9 nimmt dabei den ausgeschnittenen Abschnitt der Kunststoffrohrleitung auf.

Die Ventilbuchse 3 weist benachbart zu dem Ende, an dem der Betätigungszapfen der Gewindespindel 6 herausragt, mindestens eine umfangsmässig umlaufende Nut 12 mit einem zum Ventilsitz gerichteten Schenkel 13 auf. Die Nut kann "I-förmig" ausgebildet sein, oder aber die in den Detailansichten 12a, 12b, 12c, 12d und 12e ausgeführten Geometrien aufweisen.

Das Gehäuse 1 ist um die Ventilbuchse 3 und um dessen Abzweighülse 4 herum gespritzt, so dass das Kunststoffmaterial des Gehäuses 1 die Nut 12 vollständig füllt. Hierdurch wird eine selbsthelfende Dichtung insofern gebildet, als eventuell zwischen Gehäuse 1 und Ventilbuchse 3 hindurchkriechendes Medium entsprechend seinem Druck den Schenkel 13 gegen den Nutgrund der Nut 12 pressen wird, so dass sich über den gesamten Umfang der Buchse eine automatische Abdichtwirkung ergibt.

Hierdurch entfallen die sonst üblichen Dichtungsringe zwischen Gehäuse 1 und Ventilbuchse 3 und Konstruktion und Montage sind entsprechend vereinfacht.

Die Ventilbuchse 3 bildet eine Anschlagschulter 14 für den Ventilkörper 5. Der Ventilsitz 10 ist separat eingesetzt und stützt sich zur Zutrittsöffnung 11 hin an einem Ring 15 des Gehäuses 1 ab. Das Gehäuse 1 kann auch bis auf die Stirnseite der Ventilbuchse 3 herum gespritzt sein.

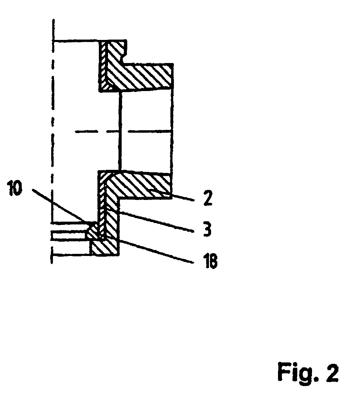

Bei der in Fig. 2 dargestellten Ausführungsform ist die Ventilbuchse 3 mit einem Buchsenabschnitt 16 verschraubt, der einstükkig mit dem Ventilsitz 10 ausgebildet ist und die Abzweighülse 4 trägt. Die Ventilbuchse 3 trägt hierbei einen auswärts gerichteten, als Anschlag für den Buchsenabschnitt 16 dienenden Ring 17, der von dem Kunststoff des Gehäuses 1 umspritzt ist.

## Patentansprüche

1. Ventil-Anbohrarmatur für eine Kunststoffrohrleitung mit einem einen Abzweigstutzen (2) aufweisenden Gehäuse (1) aus Kunststoff, das einen Ventilkörper (3) aufnimmt, wobei das Gehäuse (1) um den Ventilkörper (3) gespritzt ist, **dadurch gekennzeichnet, dass** der Ventilkörper (3) mehrteilig ausgebildet ist und eine Abzweighülse (4) aufweist, die von Abzweigstutzen umspritzt ist, dass der Ventilkörper (3) einen Ventilsitz (10) und einen auswärts gerichteten Ring (17) trägt, der als Anschlag für den Ventilkörper (3) dient und sich in das Gehäuse (1) hinein erstreckt, und dass die Abzweighülse (4) mindestens zwei Schenkel (13) aufweist, wobei an der zum Abzweigstutzen (2) gerichteten Oberfläche der Schenkel (13) mindestens eine schwalbenschwanzförmige umlaufende Nut (12) ausgebildet ist.

2. Ventil-Anbohrarmatur nach Anspruch 1, **dadurch gekennzeichnet, dass** der Ventilkörper (3) einen als Ventilsitz ausgebildeten Ring (18) trägt.

## Claims

1. Valve tapping fitting for a plastic pipeline, having a plastic housing (1) which has a branch connection piece (2) and accommodates a valve body (3), the housing (1) being injection moulded around the valve body (3), **characterized in that** the valve body (3) is of multi-piece design and has a branch sleeve (4) which is encapsulated by the branch connection piece, **in that** the valve body (3) carries a valve seat (10) and a ring (17) which is directed outwards, serves as a stop for the valve body (3) and extends into the housing (1), and **in that** the branch sleeve (4) has at least two legs (13), at least one dovetailed encircling groove (12) being formed on the surface of the legs (13) which is directed towards the branch connection piece (2).

2. Valve tapping fitting according to Claim 1, **characterized in that** the valve body (3) carries a ring (18) designed as a valve seat.

## Revendications

1. Robinet auto-perceur à soupape pour une conduite de plastique avec un corps en plastique (1) présentant un raccord de branchement (2), qui reçoit un corps de soupape (3), dans lequel le corps (1) est moulé par injection autour du corps de soupape (3), **caractérisé en ce que** le corps de soupape (3) est réalisé en plusieurs parties et présente un manchon de branchement (4), qui est gainé par injection par le raccord de branchement, **en ce que** le corps de soupape (3) porte un siège de soupape (10) et une bague (17) orientée vers l'extérieur, qui sert de butée pour le corps de soupape (3) et s'étend dans le corps (1), et **en ce que** le manchon de branchement (4) présente au moins deux branches (13), dans lequel au moins une rainure périphérique (12) en forme de queue d'aronde est formée sur la surface de la branche (13) orientée vers le raccord de branchement (2).

2. Robinet auto-perceur à soupape suivant la revendication 1, **caractérisé en ce que** le corps de soupape (3) porte une bague (18) configurée en siège de soupape.
